Europäisches Patentamt

European Patent Office

Office européen des brevets

(19)

(11) Publication number : **0 550 416 B1**

(12) # EUROPEAN PATENT SPECIFICATION

(45) Date of publication of patent specification :
**27.09.95 Bulletin 95/39**

(51) Int. Cl.⁶ : **G11B 23/087, G11B 23/037**

(21) Application number : **93104702.1**

(22) Date of filing : **14.03.90**

(54) **Hub for tape cassette.**

(30) Priority : **15.03.89 JP 60697/89**

(43) Date of publication of application :
**07.07.93 Bulletin 93/27**

(60) Publication number of the earlier application in
accordance with Art. 76 EPC : **0 387 847**

(45) Publication of the grant of the patent :
**27.09.95 Bulletin 95/39**

(84) Designated Contracting States :
**DE FR GB LU NL**

(56) References cited :
**EP-A- 0 267 616**

(73) Proprietor : **TDK CORPORATION**
**13-1, Nihonbashi 1-chome**
**Chuo-ku Tokyo (JP)**

(72) Inventor : **Satoh, Takateru**
**318, Oaza-Takayagi**
**Saku-shi, Nagano-ken (JP)**
Inventor : **Shiba, Haruo**
**273-8, Oaza-Kamasu**
**Komoro-shi, Nagano-ken (JP)**
Inventor : **Ikebe, Masaru**
**3367-35, Iwamurada**
**Saku-shi, Nagano-ken (JP)**
Inventor : **Suzuki, Hiroki**
**3252-2, Oaza-Nakagomi**
**Saku-shi, Nagano-ken (JP)**
Inventor : **Miyazaki, Yukio**
**3252-2, Oaza-Nakagomi**
**Saku-shi, Nagano-ken (JP)**

(74) Representative : **Schwan, Gerhard, Dipl.-Ing.**
**Elfenstrasse 32**
**D-81739 München (DE)**

# EP 0 550 416 B1

## Description

The present invention relates to a hub for a tape cassette.

A tape cassette such as a video tape cassette, an audio tape cassette, etc. has a pair of tape winding hubs to wind a tape thereon. This kind of hub is generally made of polyacetal (POM) or polycarbonate, etc. and comprises a hub body having a recess formed in a part of the periphery of the hub, and a type clamp snapped in the recess. The present invention is applied to the hub body, and in some cases to the clamp, too.

One end of a magnetic tape is fixed by fitting a clamp in the recess formed on the hub. In this case, a step or difference in height is often formed between the clamp and the hub, and there is a possibility of this step being transferred, after long hours of non-use, to the magnetic tape to form creases, which cause increase in error rate. If the creases are large, a gap will be created between the tape and the head which, due to the spacing loss, causes reduction of output and read out error, etc. Even if an error occurs, previously registered data can be restored to some degree by interpolation if the error rate is low, while, if there are too many errors, a muting condition, i.e. a state of no sound will result.

Demands for performances of a tape cassette are becoming more and more severe. For example, regarding recording/reproduction, a DAT cassette for audio or information is now on the market. However, it is necessary to restrain as much as possible wrong recording or read out error rate (the so-called "error rate") of digital information to improve fidelity. Even in other analog recording systems, it is necessary to improve not only the performance of a digital tape but also the mechanical performance of a cassette by slowing down the speed of the tape. Referring to a DAT tape, the present situation is that the error rate of the portion of a digital tape wound near the hub is worse compared with the other portions. More particularly, a digital tape stored for a long period of time or stored at high temperatures has this tendency, and errors in interpolation area are not allowed for information use, although it is allowed for music use. The target for the time being is is to restrain it in the order of $10^{-2}$(one piece among 100 pieces of the error rate according to the high temperature storage test to be defined hereafter), and further reduction is desired.

To solve this problem improvements in design have been made, including reduction of the difference in height and gap between the hub body and the clamp, or restriction of sink mark (local thermal contraction at the time of injection molding) but, nevertheless, a satisfactory solution has not been offered yet.

Accordingly, the object of the present invention is to provide a hub to be used for a tape cassette with high stability of dimensions.

According to the present invention, a hub for a tape cassette including a hub body and a tape clamp both for winding a tape thereabaout, is characterized in that said hub body is made of plastic material and a plated metal film is formed on the surface of the periphery. The material of the plated metal film preferably is selected from a group consisting of nickel, chrome and aluminum.

With a hub consisting of a hub body made of plastic material and a metal-plating film formed on its peripheral surface and a clamp snapped in the recess of the hub body, a high temperature stability of finished articles is enhanced, the dimensions are little changed after long period of storage at high temperatures and, accordingly, the characteristics of registration/reproduction of the tape cassette using this hub are improved. When, for example, the hub is used for a DAT cassette, the error rate decreases sharply. When the present invention is applied to other types of cassette, a suitable effect by stability can be attained.

In the course of efforts to reform a conventional hub, it was found that the afore-mentioned problems of a conventional hub, namely, the causes which increase the error rate, depend greatly upon the accuracy of dimensions at the time of plastic molding and the aging after that. At the time of molding, a conventional hub has a comparatively large coefficient of linear expansion, which, for example, is 10-12 x $10^{-5}$ cm/cm°C with polyacetal and 8 x $10^{-5}$ cm/cm°C with polycarbonate. This causes deformation of the peripheral surface of molded articles due to which sink marks or the like caused by local variations of thickness damage the true cylindricity of the peripheral surface. After molding, too, the dimensions of the hub tend to be changed by aging under the effect of temperature, etc. which causes a local change of diameter of the hub and a deviation from the true cylindricity of the peripheral surface.

In accordance with the present invention, it has been found that the conventional problems can be solved by a hub comprising a hub body and a tape clamp snapped in a recess of the hub body which is characterized in that the hub body is formed from any plastic material and that a plated metal film is provided on the periphery of the hub.

The deformation of the peripheral surface is restrained by physically restricting the thermal expansion of the hub, and experiments have confirmed that desired results are attained.

In this case, the plastic material to be used for a hub body may be any plastic material conventionally used for this kind of hub, for example, ABS-styrene copolymer, polyacetal (POM), polycarbonate, polypropylene, polyethylene, PBT (polybutylene terephtalate), polystylrol, and the like. If it consists, preferably, of a plastic

2

material with a low coefficient of thermal expansion and with small change by aging, for example, all aromatic polyesters (for example, VECTRA sold by Cellanese Corp. of USA), better results are obtained.

As a metal for plating, any metal for plating conventionally used may be used. For example, a film of metal plated on the peripheral surface may be formed according to such a process as non-electrolytic plating followed by subsequent electroplating on the surface of plastic. Possible examples are to plate an underlayer of nickel and then a top layer of chromium, an underlayer of copper and a top layer of nickel or an underlayer of copper and a top layer of chromium, or to plate with these metals alone, etc.

The invention will now be described in detail in the following in connection with preferred embodiments of the invention, with reference to the drawings in which

Fig. 1    shows a front view of a hub of a preferred embodiment of the present invention; and

Fig. 2    shows a graph showing the change in size or dimension by aging of the preferred examples and comparative examples.

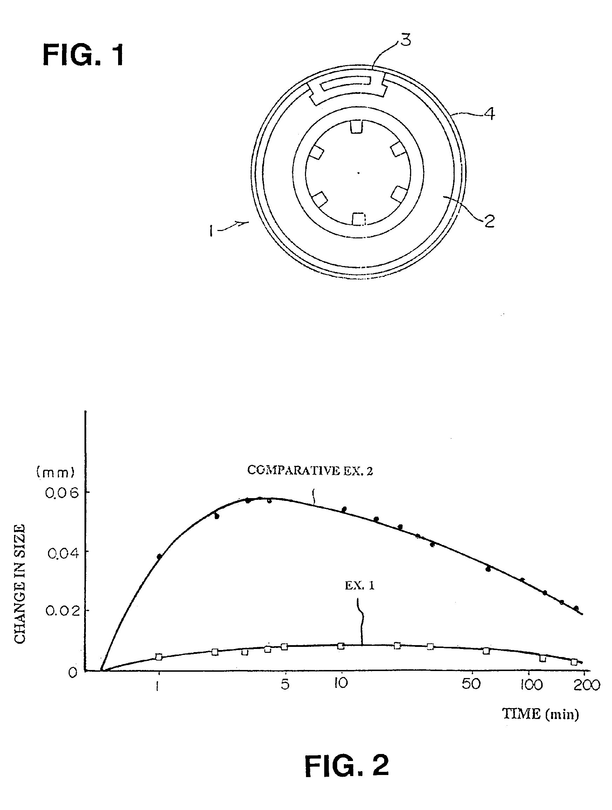

The embodiments will now be explained by making reference to an example of a DAT cassette. Fig. 1 illustrates a tape winding hub 1 according to the present invention, wherein the hub 1 consists of a hub body 2 and a tape clamp 3 which is snapped in a recess of the hub body. A structure of this kind is conventional. According to the embodiment of the present invention, at least the hub body 2 is made of plastic material selected from the aforementioned various kinds of plastic materials, and further on its peripheral surface (or together with the peripheral surface of clamp 3) is formed a film 4 of plated metal as illustrated in Fig. 1.

The present invention will, hereafter, be further explained in detail referrring to comparative examples and preferred examples.

## Comparative Examples 1,2,3

The hub body of the structure in Fig. 1 was made by molding ABS-polystyrene copolymer which is a Comparative Example 1, the one using polyacetal (POM) shown as Comparative Example 2, and the one using polycarbonate shown as Comparative Example 3.

## Example 1

An underlayer of non-magnetic nickel-phosphor was formed on the periphery of hub bodies of various kinds of hubs of Table 1 by non-electrolytic plating followed by elecrolytic plating with chromium. The result of change by aging in dimension of the various kinds of the hubs under the conditions of 80 °C, 0 % RH is shown in Fig. 2. It is clearly shown that the stability of dimensions by aging is greatly improved in accordance with the present invention.

Further, the error rate of hub with this plated film of metal was measured. The result is shown in Table 2.

## Ratio of Molding Contraction

The result of measured ratio of molding shrinkage or contraction of the aforementioned hubs is listed in Table 1. (Only Comparative examples are listed in Table 1).

The ratio of molding contraction was obtained from the measured shrinkage of diameter (at 90 degrees from the recess for a clamp) of the hub body based on metal mold dimensions.

As is seen from Table 1, POM, etc. have comparatively high ratios of contraction.

## Stability

Further, error rates of the samples and a few articles on the market were measured. Using an equipment for a DAT cassette, recording/reproduction error rates were first measured for 6 minutes from the start of winding of a magnetic tape which was then reeled in the play mode and stored for 3 hours in a space at a constant temperature of 80 °C and 0 % RH and thereafter the error rates were measured again. The result is shown in Table 2. Table 2 indicates the number of samples with which errors occurred against the total number of test samples. It is normally required that the error rate after storage be below $10^{-2}$.

As seen from Table 2, the error rate is lower with the hub of the present invention. The result of change in hub dimensions in the same condition of 80 °C, 0 % RH is shown in Fig. 2.

Table 1

| | Name of Material | Coefficient of Molding contraction |
|---|---|---|
| Comparative Example 1 | ABS - polystryrene copolymer | 0.40 - 0.60 |
| Comparative Example 2 | Polyacetal POM | 2.00 - 2.30 |
| Comparative Example 3 | Polycarbonate | 0.50 - 0.80 |

Table 2

Change of Error Rate After High Temperature Storage

$10^{-1} \Leftarrow$ Bad,  Good $\Rightarrow 10^{-4}$

| Conditions | Before storage | | | After Storage | | | |
|---|---|---|---|---|---|---|---|
| 80°C Dry 3hrs. | $10^{-2}$ | $10^{-3}$ | $10^{-4}$ | $10^{-1}$ | $10^{-2}$ | $10^{-3}$ | $10^{-4}$ |
| Com. Ex. 1 | | 5/5 | | 3/5 | 2/5 | | |
| Com. Ex. 2 | | 4/5 | 1/5 | 4/5 | 1/5 | | |
| Com. Ex. 3 | | 5/5 | | 3/5 | 2/5 | | |
| Ex.1 | | 5/5 | | | 2/5 | | |
| Com. Ex. 1 + plating | | | | | | 3/5 | |

4

## Claims

1. A hub for winding a tape thereabout for a tape cassette consisting of a hub body (2) and a tape clamp (3) fitted in a recess of the periphery of the hub (1), characterized in that at least said hub body (2) is made of plastic material and a plated metal film (4) is formed on the surface of the periphery.

2. A hub for magnetic tape cassette as claimed in claim 1, wherein the material of the plated metal film is selected from a group consisting of nickel, chrome and aluminum.

## Patentansprüche

1. Nabe zum Aufwickeln eines Bandes für eine Bandkassette, bestehend aus einem Nabenkörper (2) und einer Bandklemme (3), die in eine Ausnehmung am Umfang der Nabe (1) eingepaßt ist, dadurch gekennzeichnet, daß mindestens der Nabenkörper (2) aus Kunststoff gefertigt ist und auf die Umfangsfläche ein Metallfilm (4) aufgebracht ist.

2. Nabe für eine Magnetbandkassette nach Anspruch 1, bei der der Werkstoff für den aufgebrachten Metallfilm aus der aus Nickel, Chrom und Aluminium bestehenden Gruppe ausgewählt ist.

## Revendications

1. Moyeu pour enrouler une bande autour de lui pour une cassette à bande, comprenant un corps (2) de moyeu et une bride (3) de bande ajustée dans un évidement de la périphérie du moyeu (1), caractérisé en ce qu'au moins ledit corps de moyeu (2) est réalisé en matière plastique et un film métallique déposé (4) est formé sur la surface de la périphérie.

2. Moyeu pour cassette à bande magnétique selon la revendication 1, dans lequel la matière du film métallique déposé est choisie dans un groupe constitué du nickel, du chrome et de l'aluminium.

**FIG. 1**

**FIG. 2**